# EUROPEAN PATENT APPLICATION

(11) **EP 2 075 963 A1**
(43) Date of publication of application: **01.07.2009**
(21) Application number: 07380377.7
(22) Date of filing: 26.12.2007
(51) Int. Cl.: H04L 12/56, H04W 88/08

(54) **Method, system and device for exchanging data packets in wide area cellular telephone networks**

(71) Applicant: Vodafone Group PLC, Newbury Berkshire RG14 2FN (GB); Vodafone España, S.A., 28108 Alcobendas (Madrid) (ES)
(72) Inventor: Bustillo Velasco, Jaime, 28108 Alcobendas (Madrid) (ES); Garriga Muniz, Beatriz, 28108 Alcobendas (Madrid) (ES); Tenorio Sanz, Santiago, 28108 Alcobendas (Madrid) (ES); Dominguez Palao, Francisco Javier, 28108 Alcobendas (Madrid) (ES)
(74) Representative: Carpintero Lopez, Francisco

(57) **Abstract**

The exchanging of data packets involves at least a first node and at least a second node capable of connecting each other through lub interface and exchanging data packets using a protocol stack which comprises a IP or ATM based transport network layer and at least a physical layer (Phy1, Phy2, Phy3). One of the two nodes can be a target node-B (NB_target) connected to at least one user equipment (UE) through Uu interface and the other node, a hub node-B (NB_hub) connected to a radio network controller (RNC). The lub interface between both nodes uses a W-CDMA physical layer (Phy2) and a layer 2 over said W-CDMA physical layer consisting of Media Access Control (MAC) protocol and Radio Link Control (RLC) protocol. The W-CDMA physical layer (Phy2) in lub interface uses a frequency band different from the frequency band used at the W-CDMA physical layer (Phy3) configured in Uu interface.

## Description

### TECHNICAL FIELD OF THE INVENTION

The present invention has its application within the telecommunications sector and, especially, in the industrial area engaged in providing access networks (e.g., UTRAN in UMTS) with elements of cellular infrastructures such as base stations (e.g., Nodes-B in UMTS) for wide area cellular telephone networks (i.e., 3G networks).

More particularly, the invention described herein relates to a method and system for transmitting and receiving data packets within the access network of a wireless communications system supporting 3G or beyond 3G technologies (e.g., HSDPA, LTE, WiMax, etc.).

### BACKGROUND OF THE INVENTION

Third Generation (3G) is a generic name for technologies that support high-quality voice, high-speed data and video in wireless cellular networks. The IMT-2000 specification defined by the International Telecommunication Union (ITU) established transmission rate standards for 3G systems and defines different 3G variants based on Code Division Multiple Access (CDMA) technology: Wideband CDMA (W-CDMA) and cdma2000. In Europe, W-CDMA/3G services are called the Universal Mobile Telephony System (UMTS).

UMTS, using W-CDMA, supports up to 14.0 Mbit/s data transfer rates in theory, using the High-Speed Downlink Packet Access (HSDPA). Currently, HSDPA enables downlink transfer speeds of up to 7.2 Mbit/s. Longer term, the 3GPP Long Term Evolution (LTE) plans to move UMTS to Fourth Generation (4G) speeds of 100 Mbit/s down and 50 Mbit/s up, using a next generation air interface technology based upon OFDM.

UTRAN (UMTS Terrestrial Radio Access Network) is a collective term which includes the Radio Network Controller (RNC), the 3G base stations (Nodes-B) and the air interface to the User Equipment (UE). More particularly, Node-B and RNC are elements that make up the UMTS radio access network and communicate through determined interfaces. Node-B handles radio channels, including the multiplexing/demultiplexing of user voice and data information. RNC is responsible for controlling and managing the multiple base stations (Nodes-B) including the utilization of radio network services.

There are four interfaces connecting the UTRAN internally or externally to other functional entities: lu, Uu, lub and lur. In particular, the Uu is an external interface, connecting the Node-B with the UE or mobile equipment (ME) that includes, for example, phones, laptops and PDAs. The lub is an internal interface connecting the RNC with the Node-B, typically consisting of multiple T1/E1 links from each Node-B aggregated to one or several ATM STM-1 (OC-3) links or one STM-4 link.

More specifically, lub constitutes the Node-B Application Part (NBAP) defined by the 3GPP specification TS 25.433. This lub interface provides UTRAN specific signaling and control for the following sample areas:
- Management of common channels, common resources, and radio links
- Configuration management, such as cell configuration management
- Measurement handling and control
- Synchronization (TDD)
- Reporting of error situations

On the other hand, Uu handles the control plane signaling between the UE and the UTRAN, constituting the Radio Resource Control (RRC) defined by the 3GPP specification TS 25.331. Some of the functions offered by this interface include the following areas:
- Broadcasting information
- Management of connections between the UE and the UTRAN, which include their establishment, maintenance, and release
- Management of the radio bearers, which include their establishment, maintenance, release, and the corresponding connection mobility
- Ciphering control
- Outer loop power control
- Message integrity protection
- Timing advance in the TDD mode
- UE measurement report evaluation
- Paging and notifying

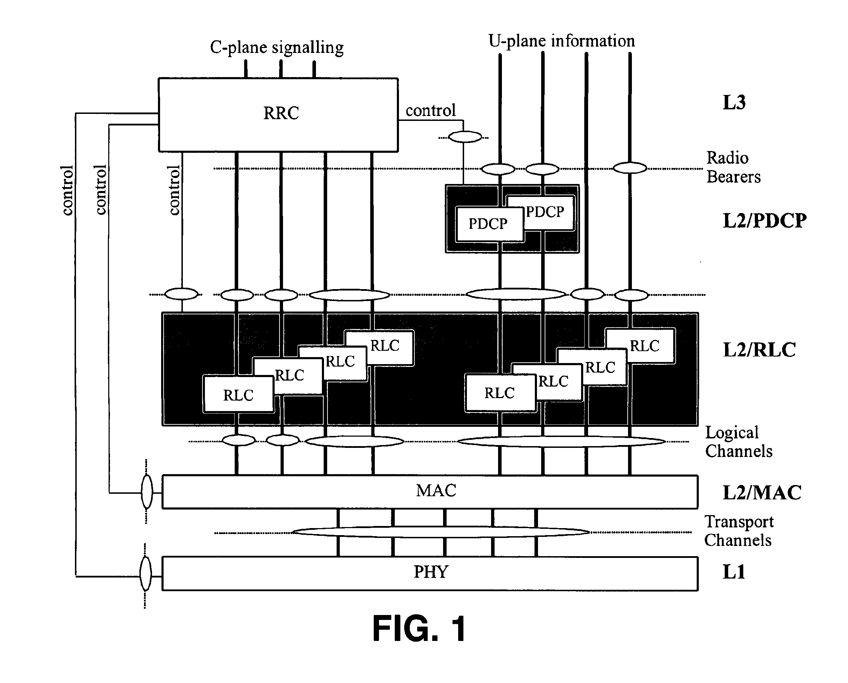

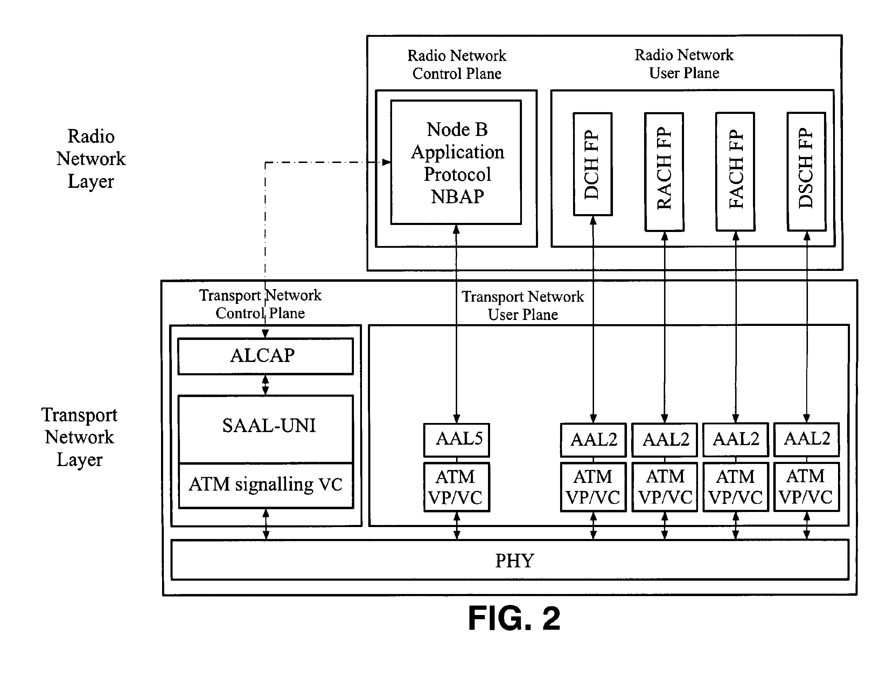

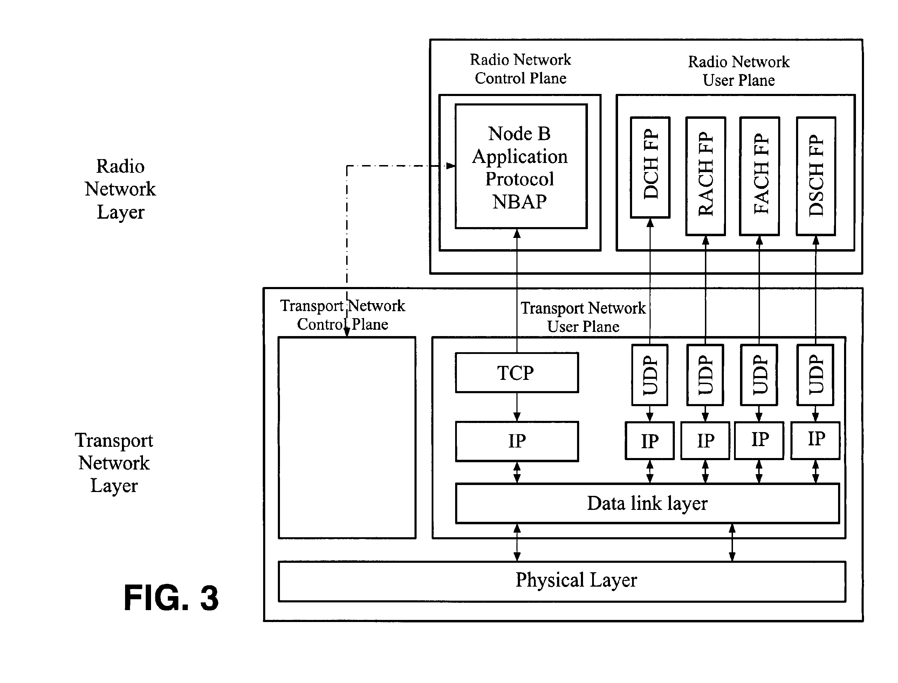

Figure 1 illustrates the RRC protocol architecture for providing communication between UE and Node-B over Uu interface. Figures 2-3 show the Node-B Application Part (NBAP) and user plane part in protocol stack which corresponds to lub interface implementation on Asynchronous Transfer Mode (ATM) and Internet Protocol (IP) respectively. 3GPP specifications involved are:
- 3GPP TS 25.321: "MAC Protocol Specification".
- 3GPP TS 25.322: "RLC Protocol Specification".
- 3GPP TS 25.302: "Services provided by the Physical Layer".
- 3GPP TS 25.301: "Radio Interface Protocol Architecture".

Commonly, all the interfaces in the UTRAN are implemented using ATM or IP, except Uu interface which uses W-CDMA technology.

Current lub implementations are based on ATM/IP and there are different possibilities for the physical layer: optical fiber, copper line, microwave radiolinks implementing E1, Ethernet physical layer, ADSL physical layer, etc.

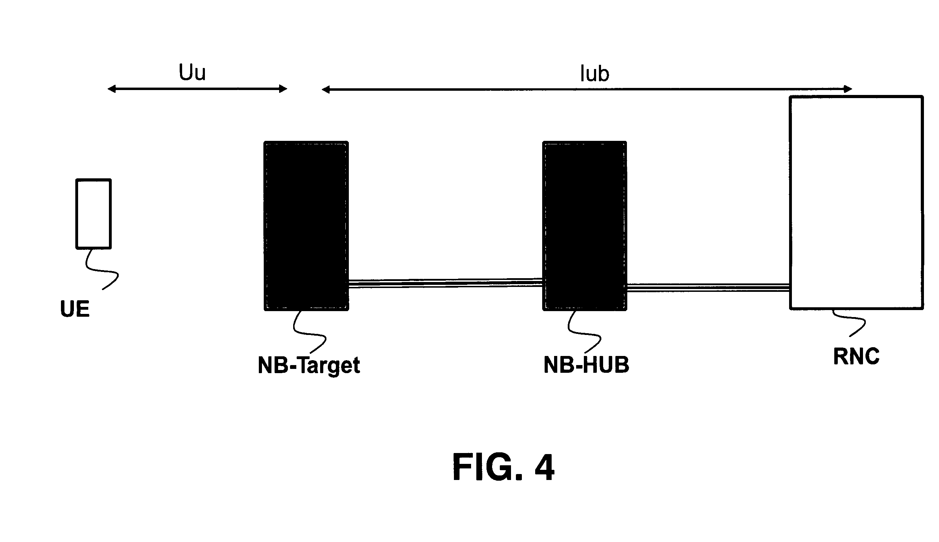

A so-called Node-B hub (NB-HUB) can be used in the middle of the connection over lub between the Node-B (NB-Target) connected to the User Equipment (UE) and the RNC, as shown in Figure 4.

In clusters where Nodes-B have difficulties to add transmission resources, the Node-B target can connect with a Node-B with high lub bandwidth: the node-B Hub.

Coupled with the high-speed experiences that a 3G technology such as HSDPA provides, there is a dramatic increase in traffic volume. Compared with the R99/R4 network, HSDPA poses higher requirements on transmission network bandwidth even more as offered peak rates increase.

In order to mitigate the lub limitation in current networks a new mechanism to manage the traffic is presented.

### SUMMARY OF THE INVENTION

The present invention serves to solve the aforesaid problem by including a layered protocol structure based on Uu interface protocol stack as a physical layer of lub interface. Thus, a first node with lub resources limitations (e.g., a Node-B target connected to the UE) is allowed to use such new physical layer (Uu interface) included in lub interface in order to connect and send data information to a second node (e.g., a Node-B hub connected to the RNC) which is already provided with enough transmission resources.

More concretely, the exchanging of data packets between the first node and the second node, in both transmission directions, over the lub interface proposed here, uses a Radio Link Control (RLC) protocol and a Media Access Control (MAC) protocol over a radio channel of a W-CDMA physical layer.

The radio interface used for the invention is layered into three protocol layers: the physical layer, the data link layer and the network layer. In turn, the data link layer is split into following sublayers: Medium Access Control (MAC), Radio Link Control (RLC) and Packet Data Convergence Protocol (PDCP). The (RLC) protocol layer as well as the network layer is divided into Control and User planes. PDCP, the protocol which uses the service provided by the lower layer RLC to perform header compression/decompression of IP data streams (e.g., TCP/IP and RTP/UDP/IP headers), transfer of user data and maintenance of sequence numbers for Radio Bearers, exists in the User plane only.

The MAC layer provides data transfer services on logical channels. A set of logical channel types is defined by which type of information is transferred, being generally classified into two groups:
- control channel (for the transfer of Control plane information), and in this group two kind of logical channels can be distinguished:
   ■ CCCH: Common Control Channel (for transmission setup between a Node-B hub and a Node-B target)
   ■ DCCH: Dedicated Control Channel (for transmission of dedicated control information between the Node-B hub and the Node-B target);
- traffic channel (for the transfer of User plane information) which deals with a Dedicated Traffic Channel (DTCH), dedicated to one Node-B target.

The physical layer transport channels, which can be classified also into two groups: common transport channels and dedicated transport channels. Common transport channel used for the invention are:
- RACH: Random Access Channel (for the setup of the channel when switching on the system of transporting the lub data)
- FACH: Forward Access Channel (for the first setup of the lub transmission system)
- HS-DSCH: High Speed Downlink Shared Channel (for all the data transmission, constituting a downlink channel shared between different Node- B targets by allocation of individual codes, from a common pool of codes assigned for the channel)
   Dedicated transport channel types are:

- DCH: Dedicated Channel (dedicated to one Node B target for carrying the signalling information to control the HS-DSCH channel); and,
- E-DCH: Enhanced Dedicated Channel (dedicated to one Node B target for the transport in uplink only of all the data of the lub transmission).

The functions of MAC include the mapping of logical channel(s) onto the appropriate transport channel(s) as follows:
- In Uplink (transmission path from the UE), the following connections between logical channels and transport channels are allowed: CCCH mapped to RACH, DCCH mapped to DCH and DTCH mapped to E-DCH.
- In Downlink (transmission path to the UE), the following connections between logical channels and transport channels are allowed: DCCH mapped to FACH, DCCH mapped to DCH and DTCH mapped to HS-DSCH.

The functions of the physical layer include the mapping of transport channel(s) onto physical channel(s). Physical channels are defined by a specific carrier frequency, scrambling code, channelization code (optional), time start and stop (giving a duration) and, on the uplink, relative phase (0 or π/2).

The DCH transport channels are coded and multiplexed, and the resulting data stream is mapped sequentially (first-in-first-mapped) directly to any of the following physical channels:
- DPDCH: Dedicated Physical Data Channel (uplink/downlink),
- DPCCH: Dedicated Physical Control Channel (uplink).

For the RACH and FACH transport channels, the coded and interleaved bits are sequentially mapped to the following physical channels respectively:
- PRACH: Physical Random Access Channel (for carrying the RACH),
- S-CCPCH: Secondary Common Control Physical Channel (for carrying the FACH).

The E-DCH transport channel is coded and the resulting data stream is mapped sequentially (first-in-first-mapped) directly to the following physical channels:
- E-DPDCH: E-DCH Dedicated Physical Data Channel (uplink),
- E-DPCCH: E-DCH Dedicated Physical Control Channel (uplink).
- E-AGCH: E-DCH Absolute Grant Channel (downlink),
- E-RGCH: E-DCH Relative Grant Channel (downlink)
- E-HICH: E-DCH Hybrid ARQ Indicator Channel (downlink).

Also the HS-DSCH transport channel is coded and the resulting data stream is mapped sequentially (first-in-first-mapped) directly to the following physical channels:
- HS-PDSCH: High Speed Downlink Shared Channel (downlink),
- HS-SCCH: HS-DSCH-related Shared Control Channel (downlink),
- HS-DPCCH: Dedicated Physical Control Channel for HS-DSCH (uplink).

The logical and physical channels used in the lub interface as this invention proposes can be any of the standardised in 3GPP. The most optimal is the HS-DSCH but another channel, from the above defined, can be used.

An aspect of the invention is a method for exchanging data packets in a wide area cellular telephone network, within the access network of said wide area cellular telephone network, wherein at least a first node and at least a second node (for example, two Nodes-B: a Node-B target and a Node-B hub) are identified. The exchanging of data packets between the, at least one, first node and the, at least one, second node uses a Radio Link Control (RLC) protocol and a Media Access Control (MAC) protocol over a channel of the W-CDMA physical layer.

For exchanging data packets over the proposed lub, the channel used in the W-CDMA physical layer is configured to be always opened. The transmitting node (located at the first or second depending on the architecture scenario) is configured to listen to said pre-defined channel all the time. The configuration to setup the channel in an always-open mode involves exchanging a series of messages between the first and second nodes:
- the transmitting node sends a lub TRANSPORT REQUEST message to the receiving node;
- the receiving node sends a reply for the lub TRANSPORT REQUEST message to the transmitting node, accepting the establishment of the connection between the two nodes over lub by sending a lub TRANSPORT SETUP message;
- the transmitting node acknowledge the establishment of said lub connection with the receiving node by sending a lub TRANSPORT SETUP COMPLETE message to said receiving node.

Note that the invention can be applied to exchange data packets through lub, preferably over a HS-DSCH channel, in downlink (the transmission path to the user or mobile equipment) as in uplink (the transmission path from the user or mobile equipment). In a preferred embodiment, the 3GPP standardised channels that can be used as physical channels of the proposed lub are: a permanently opened HS-DSCH channel in downlink and a E-DCH with lower data rate in uplink, or vice versa.

There are multiple options to choose the physical interface that can be applied to this invention. Commonly, the proposed exchanging of data packets over lub interface uses a frequency band at the W-CDMA physical layer which is different from the at least one frequency band used at the W-CDMA physical layer configured in Uu interface existing to connect with the, at least one, User Equipment (UE).

The throughput to be achieved depends on the coverage quality got. If the nodes are in line of sight and a directive antenna is used, data rates of several Megabits per second (Mbps) can be reached. Preferably, MIMO and/or 64QAM and advanced receivers in downlink can be used to reach more than 20 Mbps, and 16 QAM and advanced receivers can be used in uplink to reach more than 10 Mbps.

With regards to the network layer of the described lub, an ATM based transport network layer or a IP based transport network layer can be used and respectively the nodes can exchanging data packets through this lub can be normally identified by a ATM address or a IP address.

Assuming a node-B target, connected to a UE through Uu, is identified, when the packets from the RNC arrive to the node-B hub, which said node-B target is connected to through this lub, said node-B hub realizes that the packets are destined to another node-B (that is, the node-B target) and applies the hub function by using ATM or IP depending on the transport used. Then, the node-B hub redirects the traffic to the node-B target, but instead of using the Ethernet or E1 connections, or microwave radiolinks, the node-B hub uses a RLC/MAC transport protocol over WCDMA layer 1 physical channel.

Depending on the coverage, more than one node-B target can be used. Every node-B target has to be identified in a sector of the node-B hub and with a different identity. Using the WCDMA layer 1 physical channel permanently opened to transport the lub data from the node-B hub to the plurality of nodes-B target, the scheduler of said node-B hub chooses which node-B target is to be served in every transmission time interval.

Another aspect of the invention deals with a system for exchanging data packets in wide area cellular telephone networks, the wide area cellular telephone network having an access network to connect to at least UE through Uu interface using at least one frequency band. This system comprises at least a first node and at least a second node capable of connecting each other through lub interface; for example, there are at least two 3G base stations: a node-B hub and one or more nodes-B target. The exchanging of data packets uses a protocol stack, comprising at least a transport network layer and at least a physical layer. The proposal is that the, at least one, first node and the, at least one, second node of the system comprise a protocol stack forming lub interface by a RLC protocol layer and a MAC protocol layer over a W-CDMA physical layer, which uses a frequency band different from the frequency band used by the W-CDMA physical layer configured in Uu interface. This W-CDMA physical layer in lub interface is configured to use a channel permanently opened, in uplink and/or downlink. Any of the first or second nodes is capable of connecting directly to a radio network controller (RNC) and a plurality of RNCs can be connected to different nodes-B hub and nodes-B target forming a 3G meshed network.

Another further aspect of the invention is related to a device which refers to a card adapted to be incorporated in a node (for example, a Node-B) belonging to the access network of a wide area cellular telephone networks, the card comprising the protocol stack that implements the method described before. This device or card comprises a W-CDMA physical layer, a MAC protocol layer and an RLC protocol layer over the W-CDMA physical layer, and the card can be easily connected to the ATM or IP terminating points of a Node-B (node-B target or hub) that carry the information (to the UE or the RNC in each case).

The RNC has nothing to be modified for being used in the context of invention.

A last aspect of the invention consists of a third generation base station (Node-B) which integrates the protocol stack that implements the method described before, comprising a layer 1 which is a W-CDMA physical layer and a layer 2 having RLC protocol and MAC protocol sublayers. This protocol stack constitutes a lub interface with another Node-B. The W-CDMA physical layer of the layer 1 in lub interface uses a frequency band different from the frequency band used by the W-CDMA physical layer configured in Uu interface. The protocol stack can be implemented in the defined Node-B or, alternatively, said Node-B can incorporate a card as above described, comprising a W-CDMA physical layer, a MAC protocol layer and RLC protocol layer.

The benefits of the present invention are translated to reducing the traffic load and costs in transmission.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - It shows a layered protocol structure defined in the prior art for the implementation of Uu interface.
Figure 2. - It shows a layered protocol structure defined in the prior art for the implementation of lub interface based on ATM.
Figure 3. - It shows a layered protocol structure defined in the prior art for the implementation of lub interface based on IP.
Figure 4. - It shows a part of a wireless communications system, as known in the prior art, which includes the elements of a cellular infrastructure, mobile terminal of the user, bases stations and remote controller of the network, related with the object of the invention.
Figure 5. - It shows a schematic representation of the protocol stacks for the nodes which are a part related to the present invention, according to a preferred implementation.
Figure 6. - It shows a diagram of messages for radio bearer establishment using HS-DSCH in downlink, according to a possible embodiment of the invention.
Figure 7. - It shows a diagram of messages for radio bearer establishment using HS-DSCH in uplink, according to another possible embodiment of the invention.
Figure 8. - It shows a diagram of messages for transport connection establishment from a Node-B target to a Node-B hub, according to a possible embodiment of the invention.
Figure 9. - It shows a diagram of messages for transport connection establishment from a Node-B hub to a Node-B target, according to another possible embodiment of the invention.
Figure 10. - It shows a block diagram of the architecture of a possible scenario for application of the invention, using HS-DSCH to lub transport in downlink and E-DCH in uplink.
Figure 11. - It shows a block diagram of the architecture of another possible scenario for application of the invention, using HS-DSCH to lub transport in uplink and E-DCH in downlink.
Figure 12. - It shows a block diagram of the architecture of a possible scenario for application of the invention, using HS-DSCH to lub transport in uplink and ADSL in downlink.
Figure 13. - It shows a block diagram of the architecture of a further possible scenario for application of the invention, using multiple physical layers for lub transport connection.
Figure 14. - It shows a block diagram of the architecture of a yet further possible scenario for application of the invention, using multiple Node-B targets.
Figure 15. - It shows a block diagram of the architecture of another possible scenario for application of the invention, in 3G meshed networks.

### DETAILED DESCRIPTION OF THE INVENTION

The present invention proposes a method and elements of a system, which in various preferred embodiments may be incorporated in wide area cellular telephone networks operating in accordance with the 3GPP standards.

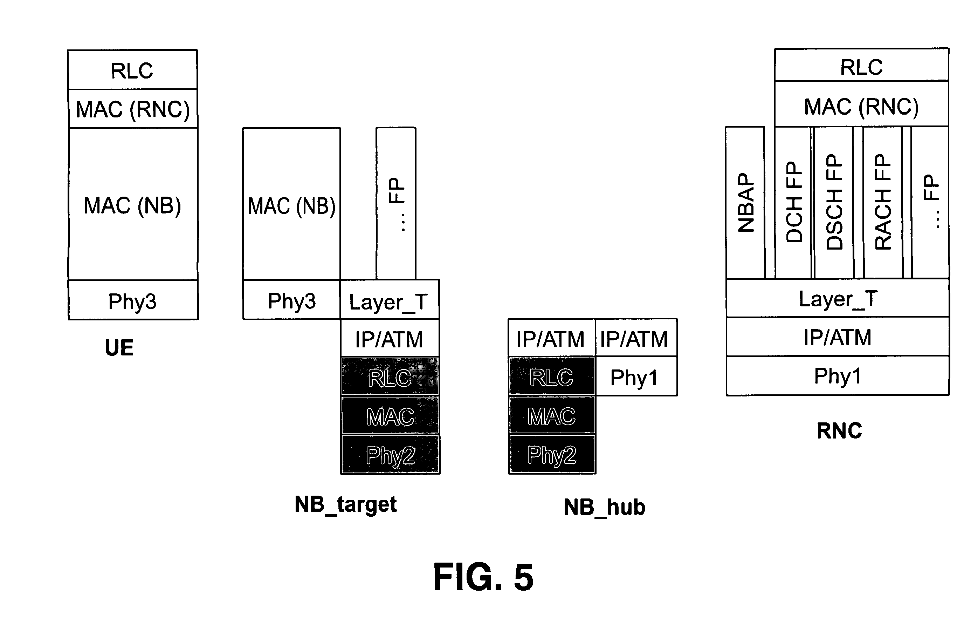

Figure 5 illustrates a user equipment (UE) and part of the access network of a wide area cellular telephone network including the elements of the system which determines an aspect the invention. Aside from the invention, the User Equipment (UE) and the radio network controller (RNC) shown in the figure are conventional and well known, and so these two elements are not described in detail here. The elements of interest are the 3G base stations: a hub node-B (NB_hub) associated to one radio network controller (RNC) through land lines or fixed radio links and a target node-B (NB_target) in communication with the User Equipment (UE) through a standardised radio interface defined as Uu interface with a physical layer (Phy3). The radio network controller (RNC) connects with the hub node-B (NB_hub) through a physical layer (Phy1) which can be E1, STM-1, ETHERNET, etc. Over the physical layer (Phy1) between the hub node-B (NB_hub) and the radio network controller (RNC), there is a transport network layer, which can be based on the Asynchronous Transfer Mode (ATM) or Internet Protocol (IP), over which a transport layer (Layer_T) is supported providing ATM Adaptation Layers or other transport layer protocols such as TCP, UDP, RTP, SCTP. 3G protocols including the Node-B Application Part (NBAP) and the different Frame Protocols (FP) are implemented over the transport layer (Layer_T).

In order to transmit/receive the downlink and uplink data signals, the 3G base stations (NB_hub, NB_target) incorporate respective transceivers that contain a transmitter and a receiver. The hub node-B (NB_hub) includes in the protocol stack a layer one or physical layer (Phy1) to communicate with the radio network controller (RNC); whilst the target node-B (NB_target) includes the physical layer (Phy3) of the Uu interface to transmit/receive to/from the UE, for example, by using any of two radio frequency bearers: f1-f2. In order to exchange data packets, in downlink and uplink, between these two 3G base stations (NB_hub, NB_target), another protocol stack is proposed including an additional physical layer (Phy2) which uses a radio frequency bearer, f3, different from the frequencies used in Uu. Over this W-CDMA physical layer (Phy2), a Radio Link Control (RLC) protocol and a Media Access Control (MAC) protocol are included in both 3G base stations (NB_hub, NB_target).

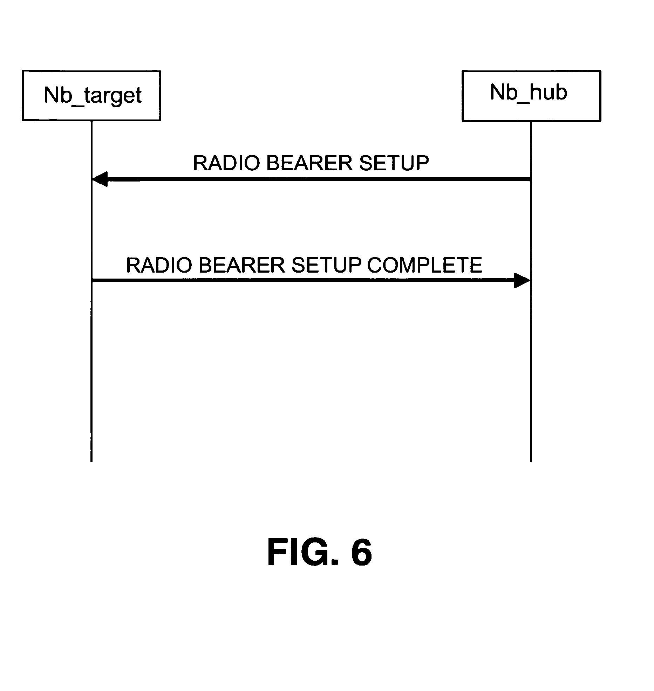

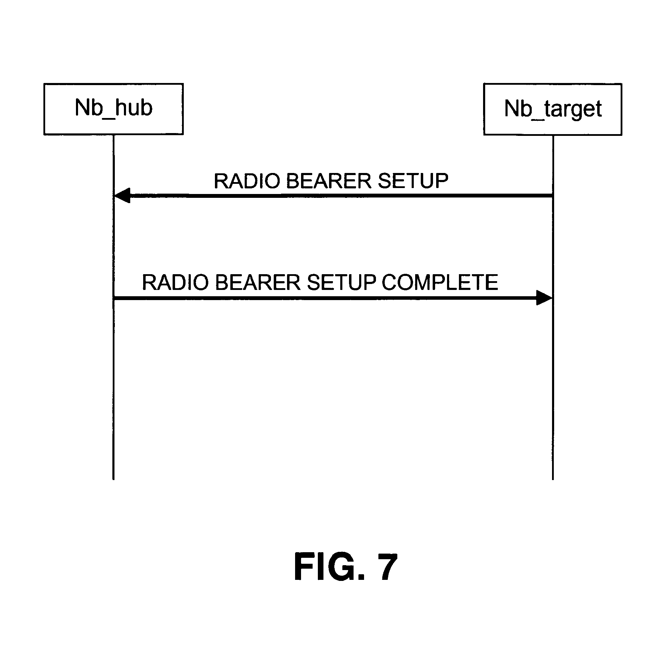

In a preferred embodiment of the invention, the W-CDMA physical layer (Phy2) between the hub node-B (NB_hub) and the target node-B (NB_target) uses HS-DSCH from the hub node-B (NB_hub) to the target node-B (NB_target), while E-DCH is used from the target node-B (NB_target) to the hub node-B (NB_hub), as shown in Figure 6. The RADIO BEARER SETUP message is like in 3GPP specifications. The contrary option is also possible: with HS-DSCH used from the target node-B (NB_target) to the hub node-B (NB_hub) and E-DCH used from the hub node-B (NB_hub) to the target node-B (NB_target), as described in Figure 7.

The transport channel used by the physical layer (Phy2), preferably HS-DSCH, is configured to be open all the time, so a configuration have to be done, to define the scrambling code and identity, and all the parameters of the channel to communicate between the hub node-B (NB_hub) and the User Equipment (UE) associated to the target node-B (NB_target).

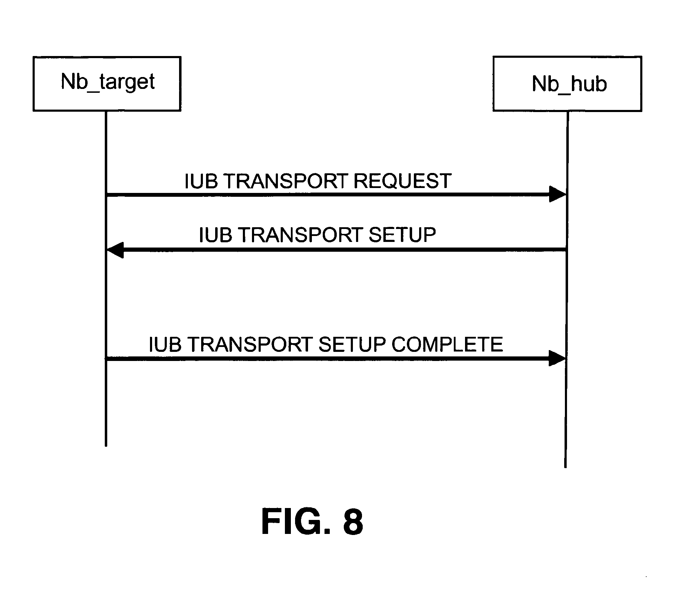

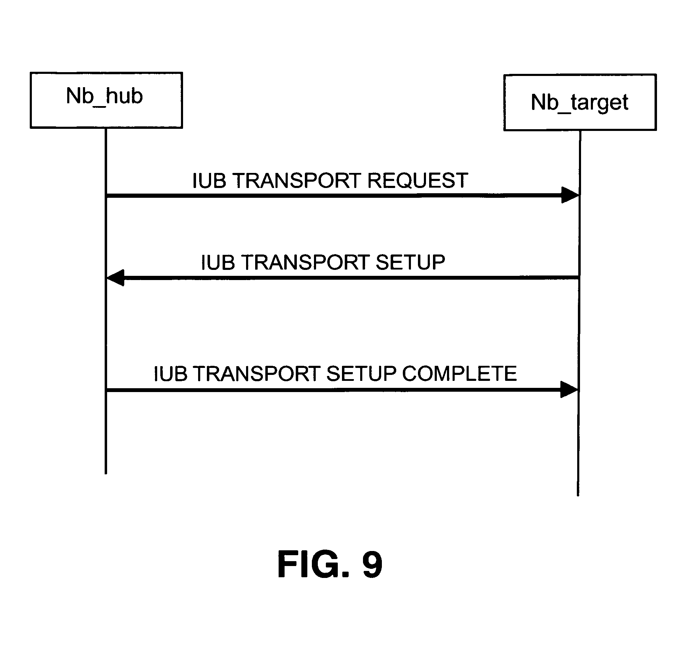

The establishment of the Signalling Radio Bearer when switching on the system after the synchronisation is described in Figure 8, after which the establishment of the Radio Bearer HS-DSCH and E-DCH is carried out as illustrated in the previous Figures 6-7. Figure 8 shows the exchanging of messages to request a lub transport connection establishment from the target node-B (NB_target) to the hub node-B (NB_hub) and said hub node-B (NB_hub) accepting the establishment of the lub connection. In case of more bandwidth, in uplink, is required from the target node-B (NB_target) to the hub node-B (NB_hub), then it is possible to establish the connection on the contrary, as shown in Figure 9. In this way, having the target node-B (NB_target) accepted the establishment of the lub transport connection, said target node-B (NB_target) has to transmit all the physical channels needed to synchronise with the hub node-B (NB_hub).

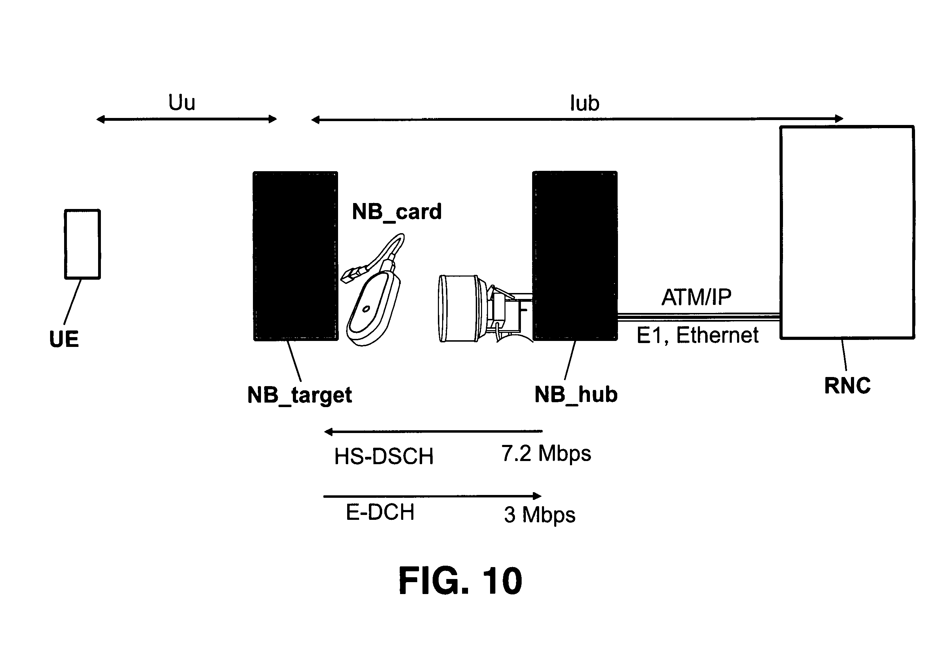

Figure 10 illustrates an application of the invention, having a node-B card (NB_card) with the protocol layers implementing the proposed lub interface: the W-CDMA physical layer (Phy2), Media Access Control (MAC) protocol layer and Radio Link Control (RLC) protocol layer. This node-B card (NB_card) is connected to the ATM/IP points of the target node-B (NB_target) in order to exchange the lub data with the hub node-B (NB_hub). The hub node-B (NB_hub) in turn carries the lub data from/to the radio network controller (RNC) through an E1 or Ethernet connection configured at the standardised lub physical layer (Phy1). The W-CDMA physical layer (Phy2) configured in the node-B card (NB_card) uses HS-DSCH to get a 7.2 Mbps data rate in downlink and E-DCH on 3 Mbps in uplink.

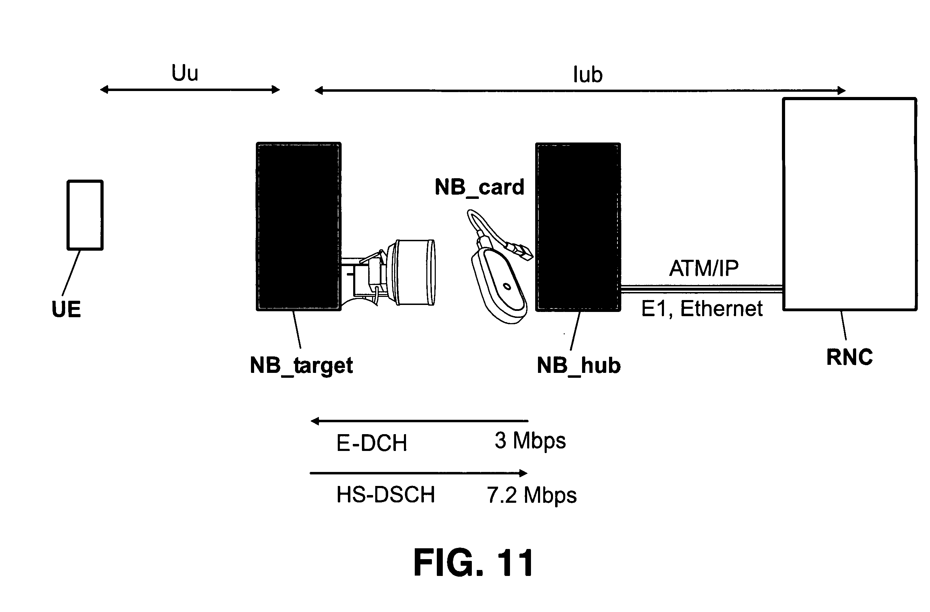

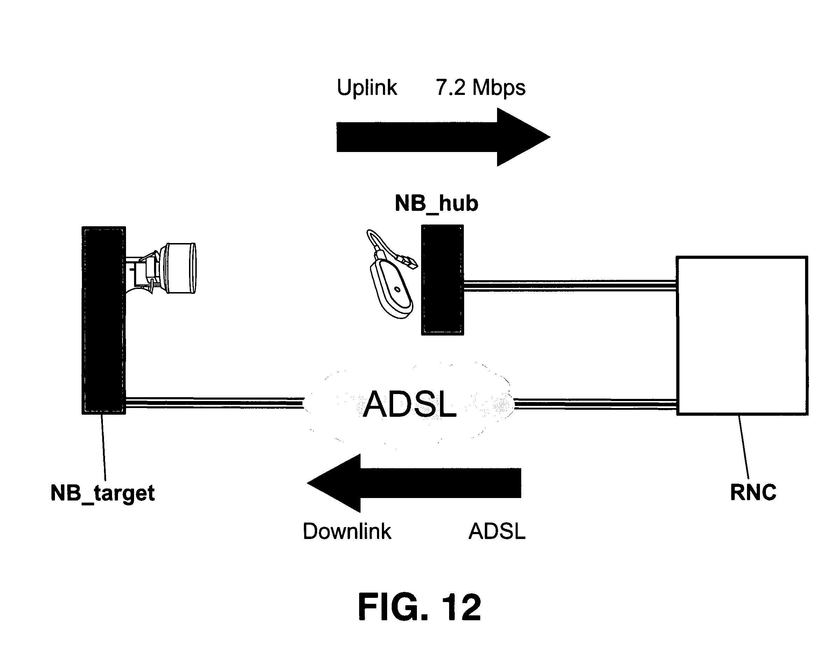

The same concept can be used to transport in the uplink on 7.2 Mbps HS-DSCH, as represented in Figure 11. This allows the uplink to improve bit rate as for example in case of using ADSL. Figure 12 represents an example of carrying the lub data from the radio network controller (RNC) to the target node-B (NB_target) in a conventional way, by using Asymmetric Digital Subscriber Line (ADSL) only for downlink, while the uplink transmission is carried with high capacity by W-CDMA physical layer HS-DCSH transport channel.

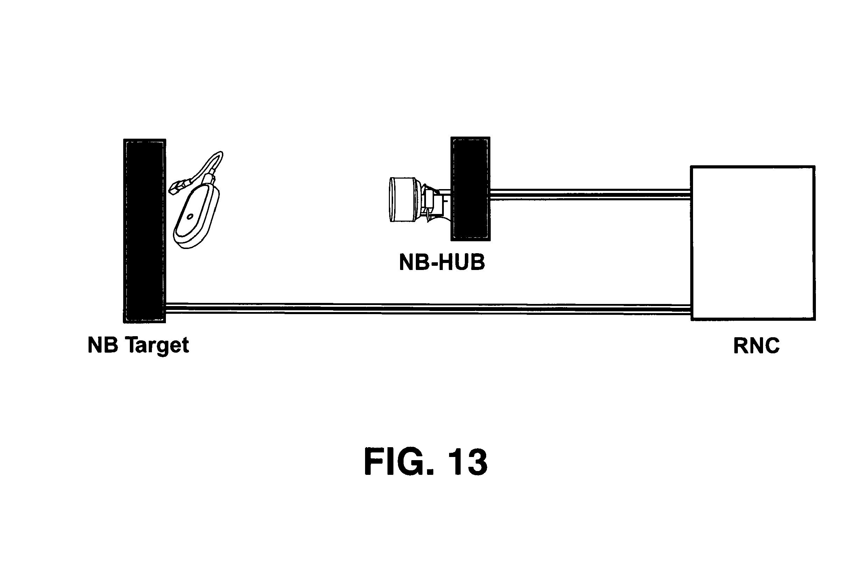

In the above illustrated examples just one W-CDMA frequency, f3, is used by the W-CDMA physical layer (Phy2) of lub, but another possible configuration allows multiple physical layers to be used for lub. This case is represented in Figure 13. In this case, the radio network controller (RNC) has mechanisms to choose the optimum path to transport the traffic: Inverse multiplexing for ATM -IMA group- can be used to optimise the resources or, also, dual path can be applied between the W-CDMA transmission and the normal direct link.

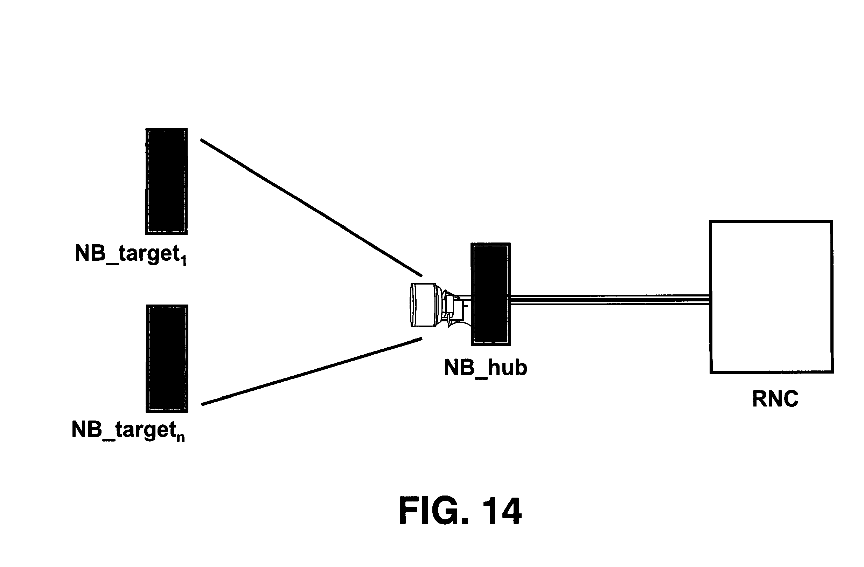

Figure 14 shows a further possible architecture of an application scenario, using HS-DSCH to transport the lub data to more than one target node-B (NB_target₁,..., NB_targetₙ), having a scheduler in the hub node-B (NB_hub) configured to choose from the plurality of n node-B targets the node which lub transport connection is established to.

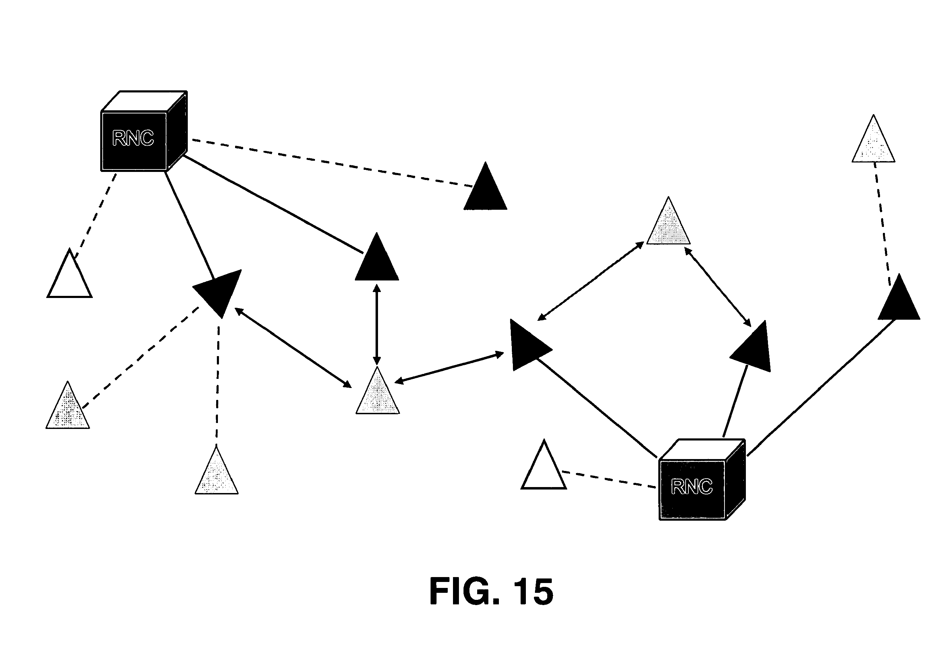

One of the complementary applications is the use of meshed networks, represented in Figure 15, comprising more than one radio network controllers (RNC), depicted as cubic nodes. Each radio network controller (RNC) can be connected conventionally, by a standardised lub interface, to a normal Node-B, drawn as white triangles. Also, there are one or more Nodes-B acting as a hub, black triangles in Figure 15, connected to the radio network controller (RNC) by a high lub bandwidth interface, depicted as a solid black line, and each hub connected to one or more Nodes-B acting as targets, grey triangles. With W-CDMA physical layer (Phy2) in lub interface, indicated by the double arrowed line, one Node-B can be served with more than one link and then it is possible to carry the traffic through the optimal route within a meshed network implementation. Double arrowed lines in black indicate possible routes in the meshed network from different radio network controllers (RNC). Double arrowed lines in grey indicate possible routes in the meshed network from the same radio network controller (RNC).

The terms in which this specification has been worded are always to be taken in the broadest sense and not restrictively.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. - Method for exchanging data packets in wide area cellular telephone networks, the wide area cellular telephone network having an access network to connect to at least one user equipment (UE) through Uu interface using at least one frequency band, comprising the following steps:
- identifying at least a first node and at least a second node of the access network, capable the, at least one, first node of connecting to the, at least one, second node;
- exchanging at least one data packet from the first node to the second node over lub interface;
**characterized in that** the step of exchanging the data packet uses a Radio Link Control (RLC) protocol and a Media Access Control (MAC) protocol over a channel of the W-CDMA physical layer.

2. - Method according to claim 1, further comprising a step of configuring the channel of the W-CDMA physical layer to be always opened.

3. - Method according to any previous claim, wherein the step of exchanging the data packet uses a HS-DSCH transport channel in a transmission path from the, at least one user equipment (UE).

4. - Method according to claim 3, wherein the step of exchanging the data packet uses an E-DCH transport channel in a transmission path to the, at least one, user equipment (UE).

5. - Method according to any previous claim, wherein the step of exchanging the data packet uses a HS-DSCH transport channel in a transmission path to the, at least one, user equipment (UE).

6. - Method according to claim 5, wherein the step of exchanging the data packet uses an E-DCH transport channel in a transmission path from the, at least one, user equipment (UE).

7. - Method according to any previous claim, wherein the step of exchanging the data packet over lub interface uses a frequency band at the W-CDMA physical layer which is different from the at least one frequency band used at the W-CDMA physical layer configured in Uu interface.

8. - System for exchanging data packets in wide area cellular telephone networks, the wide area cellular telephone network having an access network to connect to at least one user equipment (UE) through Uu interface using at least one frequency band, the system comprising at least a first node and at least a second node capable of connecting each other through lub interface and exchanging data packets using a protocol stack which comprises at least a transport network layer and at least a physical layer, **characterized in that** both the, at least one, first node and the, at least one, second node comprise a W-CDMA physical layer, Media Access Control (MAC) protocol layer and Radio Link Control (RLC) protocol over the W-CDMA physical layer.

9. - System according to claim 8, wherein the W-CDMA physical layer uses a frequency band different from the at least one frequency band used at the W-CDMA physical layer configured in Uu interface.

10. - System according to any of claims 8 or 9, wherein both the, at least one, first node and the, at least one, second node further comprise a physical layer selected from optical fibre, copper wire and microwave radio.

11. - System according to any of claims 8 to 10, wherein the W-CDMA physical layer in lub interface is configured to use a channel permanently opened.

12. - System according to claim 11, wherein the W-CDMA physical layer in lub interface uses a HS-DSCH transport channel in a transmission path from the, at least one, user equipment (UE).

13. - System according to claim 12, wherein the W-CDMA physical layer in lub interface uses a E-DCH transport channel in a transmission path to the, at least one, user equipment (UE).

14. - System according to any of claims 8 to 11, wherein the W-CDMA physical layer in lub interface uses a HS-DSCH transport channel in a transmission path to the, at least one, user equipment (UE).

15. - System according to claim 14, wherein the W-CDMA physical layer in lub interface uses a E-DCH transport channel in a transmission path from the, at least one, user equipment (UE).

16. - System according to any of claims 8 to 15, wherein the transport network layer is selected from a ATM based transport network layer and a IP based transport network layer.

17. - System according to any of claims 8 to 16, wherein both the first node and the second node are 3G base stations.

18. - System according to claim 17, wherein the first node is a target node-B (NB_target) capable of connecting to at least one user equipment (UE) and the second node is a hub node-B (NB_hub) capable of connecting to a radio network controller (RNC).

19. - System according to claim 18, wherein the target node-B (NB_target) is capable of connecting directly to the radio network controller (RNC).

20. - System according to any of claims 18 or 19, wherein the target node-B (NB_target) is capable of connecting to at least one hub node-B (NB_hub).

21. - System according to any of claims 18 to 20, wherein the hub node-B (NB_hub) is capable of connecting to at least one target node-B (NB_target).

22. - System according to any of claims 17 to 21, further comprising a plurality of radio network controllers (RNC) connected to the 3G base stations forming a 3G meshed network.

23. - Device for exchanging data packets in wide area cellular telephone networks, **characterized by** comprising a W-CDMA physical layer, Media Access Control (MAC) protocol layer and Radio Link Control (RLC) protocol layer over the W-CDMA physical layer and by being configured to implement the method defined according to any of claims 1 to 7.

24. -Device according to claim 23, **characterized in that** the device is incorporated in a 3G base station.

25. - Device according to claim 24, **characterized in that** the device is connected to an ATM port of the 3G base station.

26. - Device according to claim 24, **characterized in that** the device is connected to a IP port of the 3G base station.

27. - Third generation base station **characterized by** comprising a W-CDMA physical layer, Media Access Control (MAC) protocol layer and radio Link Control (RLC) protocol layer over the W-CDMA physical layer for exchanging data packets through lub interface.

28. - Third generation base station according to claim 27, **characterized in that** it is a target node-B (NB_target) capable of connecting to at least one user equipment (UE).

29. - Third generation base station according to claim 27, **characterized in that** it is a hub node-B (NB_hub) capable of connecting to a radio network controller (RNC).

30. - Third generation base station according to any of claims 28 or 29, wherein the W-CDMA physical layer in lub interface uses a frequency band different from the at least one frequency band used at the W-CDMA physical layer configured in Uu interface.

31. - Third generation base station according to any of claims 27 to 30, wherein the W-CDMA physical layer lub interface is configured to use a channel permanently opened.

32. - Third generation base station according to claim 31, wherein the W-CDMA physical layer in lub interface uses a HS-DSCH transport channel in a transmission path from the, at least one, user equipment (UE).

33. - Third generation base station according to claim 32, wherein the W-CDMA physical layer in lub interface uses a E-DCH transport channel in a transmission path to the, at least one, user equipment (UE).

34. - Third generation base station according to claim 31, wherein the W-CDMA physical layer in lub interface uses a HS-DSCH transport channel in a transmission path to the, at least one, user equipment (UE).

35. - Third generation base station according to claim 34, wherein the W-CDMA physical layer in lub interface uses a E-DCH transport channel in a transmission path from the, at least one, user equipment (UE).

36. - Third generation base station according to any of claims 27 to 35, further comprising a transport network layer over the Radio Link Control (RLC) protocol layer, Media Access Control (MAC) protocol layer and WCDMA physical layer; and the transport network layer is selected from a ATM based transport network layer and a IP based transport network layer.

37. - Third generation base station according to any of claims 27 to 36, further comprising a physical layer selected from optical fibre, copper wire and microwave radio.
